**Europäisches Patentamt**

**European Patent Office**

**Office européen des brevets**

(11) Veröffentlichungsnummer: **0 373 453**
**A1**

## (12) EUROPÄISCHE PATENTANMELDUNG

(21) Anmeldenummer: **89122242.4**

(22) Anmeldetag: **02.12.89**

(51) Int. Cl.⁵: **C04B 28/00**

(30) Priorität: **10.12.88 DE 3841657**
**10.11.89 DE 3937472**

(43) Veröffentlichungstag der Anmeldung:
**20.06.90 Patentblatt 90/25**

(84) Benannte Vertragsstaaten:
**AT BE CH ES FR GB GR IT LI LU NL SE**

(71) Anmelder: **F. WILLICH DÄMMSTOFFE +**
**ZUBEHÖR GMBH & CO.**
**Bünnerhelfstrasse 6**
**D-4600 Dortmund(DE)**

Anmelder: **Leske, Günter**
**Buschstrasse 16**
**D-4630 Bochum 6(DE)**

(72) Erfinder: **Leske, Günter**
**Buschstrasse 16**
**D-4630 Bochum 6(DE)**

(74) Vertreter: **Schulte, Jörg, Dipl.-Ing.**
**Hauptstrasse 2**
**D-4300 Essen-Kettwig(DE)**

(54) **Dämmstoff aus Mineralwolle und Kieselgurbindemittel sowie Herstellungsverfahren.**

(57) Für verschiedene Dämmzwecke, insbesondere für den Bereich Haushaltstechnik ist ein Wärmedämmstoff vorgesehen, der durch die Verbindung von gereinigten Mineralfasern mit Kieselgur und/oder Bentonit in unterschiedlicher Mischung und Rohdichte je nach Festigkeit, Elastizität und Flexibilität hergestellt werden ist.

Das Herstellungsverfahren ist vorteilhaft, weil in überraschend kurzer Zeit aus dem Gemisch aus Mineralfasern und angemaischtem Kieselgur der geschilderte Wärmedämmstoff herstellbar ist. Der Herstellaufwand wird durch eine Vorrichtung geringgehalten, die vorteilhafterweise einen annähernd oder sogar ganz kontinuierlichen Betrieb sichert.

Fig.1

## Dämmstoff aus Mineralwolle und Kieselgurbindemittel sowie Herstellungsverfahren

Die Erfindung betrifft einen Dämmstoff aus einem Gemisch von Mineralwolle und Bindemittel, das in einem Trocknungsprozeß ausgehärtet ist. Die Erfindung betrifft außerdem ein Verfahren zum Herstellen von Dämmstoff aus einem Gemisch von Mineralwolle und Bindemittel, wobei die Mineralwolle mit dem Bindemittel gemischt und in einer Trocknungseinrichtung ausgehärtet wird und schließlich eine Vorrichtung zur Durchführung des Verfahrens mit einem Anmaischbehälter für Bindemittel sowie einer Misch-, Form-und Trocknungseinrichtung.

Dämmstoffe werden für die verschiedensten Zwecke benötigt und eingesetzt. So sind Glas- und Mineralwollen in Form von Platten oder Matten als Wärmeisolierung im Hausbau bekannt. In Form von kompakten Platten oder Segmenten werden Dämmstoffe darüber hinaus zur Isolierung von Herden u.ä. Haushaltsgeräten sowie zur Wärmedämmung im Apparate- und Anlagenbau eingesetzt. Bekannt sind hierfür Dämmstoffe aus Mineralfasern, die bei gleicher Rohdichte organisch gebunden und bis 1000° C kurzfristig belastbar sind (Ullmanns Encyklopädie der technischen Chemie, 4. neubearbeitete und erweiterte Auflage, Band 11, Verlag Chemie, Weinheim, 1976, Seiten 365 bis 373). Diese Kunstharz stabilisierten Dämmstoffe haben aber den großen Nachteil, daß das Bindemittel bei rund 200° C verdampft. Dies führt nicht nur zu Umweltbelastungen, sondern unter Umständen zu Gesundheitsschäden, so daß davon ausgegangen werden muß, daß solche Dämmstoffe für den Bereich Haushaltstechnik, Apparate- und Anlagenbau in Zukunft nicht mehr eingesetzt werden dürfen. Bei diesen kunstharzstabilisierten Dämmstoffen wird den Mineralfasern nach dem Schmelzen und dem Durchführen durch die Düsen ein Bindemittel meist in Form von Phenolharz zugeführt, das dann die Möglichkeit bietet, aus diesen Mineralfasern Matten, Platten, Segmente oder sonstige Teile herzustellen und diese entsprechend zu Dämmzwecken einzusetzen. Die Fasern werden mit dem Phenolharz besprüht, wobei es nicht zu vermeiden ist, daß sich Ansammlungen und Ballungen von Phenolharz in den Fasern bilden, die bei dem nachfolgenden Aushärtevorgang nicht ausreichend ausgehärtet werden, so daß diese Nester dann später nach dem Verarbeiten verdampfen und dabei sowohl eine erhebliche Geruchsbelästigung wie auch weitere Umweltbeeinträchtigungen mit sich bringen.

Bekannt sind auch anorganisch gebundene Dämmstoffe (DE-OS 27 48 307). Sie haben ein hohes Raumgewicht, sind nicht flexibel und elastisch. Somit können sie nicht für alle Bereiche der Wärmedämmung im Apparate- und Behälterbau angewendet werden. Auch ist die Herstellung aurwendig und die Verarbeitung in jedem Fall aufgrund der fehlenden Elastizität mit erheblichen Schwierigkeiten verbunden.

Aus der US-PS 2 5oo 665 ist es bekannt, isolierendes Material aus Steinwolle und einen hohe Temperaturen aushaltenden Binder in Form von Bentonit zu verwenden. Der Bentonit dient dabei dazu, aus der Steinwolle große Blöcke und große Platten zu formen, die nach dem Aushärtebzw. Trocknungsvorgang sich nicht wieder auflokkern. Dabei wird Mineralwolle zunächst mit einem Binder auf Phenol-/Formaldehyd-Basis stabilisiert, um dann anschließend mit einem weiteren Binder aus einer wässrigen Aufschlämmung von Bentonit getränkt zu werden. Während sich das organische Bindemittel verflüchtigt, bleibt das zweite Bindemittel in Form von Bentonit als Bindemittel wirksam. Versuche haben aber gezeigt, daß dor Bentonit mit den mit Phenolharz gebundenen Steinwollefasern keine Verbindung eingeht, so daß lediglich die Hohlräume zwischen den Fasern ausgefüllt werden, ohne daß der Bentonit die Funktion eines echten Bindemittels übernehmen kann. Das Bindemittel soll aber nicht nur die Möglichkeit geben, aus den Mineralfasern Pakete und Platten zusammenzuballen und zusammenzuhalten, sondern soll gleichzeitig auch die einzelnen Mineralwolle fasern stabilisieren, die ansonsten leicht zerfallen und dann stauben. Darüber hinaus hat sich ergeben, daß die Trocknungszeiten des Gemisches aus Mineralwolle, Bindemittel in Form von Phenolharz und Bentonit so groß sind, daß das gesamte Herstellungsverfahren nicht wirtschaftlich ist.

Der Erfindung liegt daher die Aufgabe zugrunde, auch bei Temperaturen um oder über 200° C einwandfrei und unverändert bleibende Wärmedämmstoffe zu schaffen, sowie die Verwendung von anorganischen Bindemitteln zu verbessern.

Die Aufgabe wird erfindungsgemäß dadurch gelöst, daß das Bindemittel im Wasser angemaischtes Kieselgur ist und daß die Mineralwolle gereinigte und nicht stabilisierte von Schmelzperlen befreite Einzelmineralfasern sind.

Ein derartiger, rein anorganisch stabilisierter Dämmstoff führt überraschend zu einwandfrei verarbeitbaren Dämmstoffplatten und Formteilen, die die einmal vorgegebene Form vorteilhaft einhalten und hohe Isolierwerte ergeben. Das Kieselgur übernimmt die Funktion sowohl des die einzelnen Fasern stabilisierenden Bindemittels wie auch des die einzelnen Mineralfasern nach der einmal gegebenen Formgebung zusammenhaltenden Binders. Überraschend und besonders vorteilhaft ist dabei, daß die Aushärte- bzw. Trocknungszeiten deutlich begrenzt werden können, so daß entsprechend hergestellte Dämmstoffe wirtschaftlich eingesetzt werden können.

Nach einer zweckmäßigen Ausbildung der Erfindung ist vorgesehen, daß das Bindemittel ein Gemisch von in Wasser angemaischtem Kieselgur und Bentonit oder reinem Bentonit ist. Während das mit Wasser angemaischte Kieselgur den Vorteil hat, daß eine Belastung der Umwelt durch das zurückgeführte Wasser praktisch nicht auftritt, hat das Gemisch aus Kieselgur und Bentonit oder der reine Bentonit den Vorteil der besseren Verfügbarkeit. Kieselgurlagerstätten sind relativ vereinzelt über die Erdoberfläche verteilt, während Bentonitlagerstätten wesentlich häufiger sind.

Zur Herstellung entsprechender Dämmstoffe dient ein Verfahren, bei dem die Fasern der Mineralwolle gereinigt, auch von Schmelzperlen befreit und dann mit vorher in Wasser angemaischtem Kieselgur gemischt und anschließend unter Wasserentzug ausgehärtet werden. Durch die Reinigung der Mineralwolle und die Entfernung der Schmelzperlen erhält man eine vorteilhaft verwendbare Faser deshalb, weil sich nun das Kieselgur oder auch der Bentonit um die vereinzelte Faser herumlegt, diese Faser stabilisiert, so daß sie dann vorteilhaft weiter verarbeitet werden kann. Durch die Bildung einer entsprechenden Stabilisierungsschicht um jede einzelne Faser herum ist dann die Möglichkeit gegeben, diese einzelnen Fasern zu einem Paket zu verbinden, das dann vorteilhaft zu Platten oder zu Formteilen geformt und ausgehärtet werden kann. Die inorphile Faser ist durch entsprechende Bearbeitung bzw. Ausbildung in der Lage, Kieselgur und/oder Bentonit anzulagern und zu halten.

Das Verfahren ist vorteilhaft zu verwirklichen, indem die Mineralwolle und Kieselgur bis zur Vereinzelung der Fasern intensiv gemischt und dann weiterbearbeitet werden. Dadurch ist das Bilden von nicht stabilisierten Faserknäulen und ähnlichem wirksam unterbunden und es ist die Möglichkeit gegeben, gleichmäßig geformte und bleibende Platten und Formteile herzustellen und dann später weiterzuverarbeiten.

Die stabilisierten Mineralwollefasern und die daraus hergestellten Platten und Formteile ergeben sich insbesondere dann, wenn Fasern und Kieselgur im Verhältnis 1o:3 gemischt werden. Bei einem solchen Verhältnis ergeben sich die für die Haushaltstechnik notwendigen Wärmeleitzahlen.

Werden andere Wärmeleitzahlen bzw. andere Festigkeiten und Flexibilitätswerte gewünscht, so ist die Zusammensetzung entsprechend zugunsten des Kieselgurs oder zugunsten der Fasern zu verändern.

Die Festigkeitswerte des Endproduktes können bei der Herstellung der Dämmstoffe mitberücksichtigt werden, indem Kieselgur im Gemisch mit Bentonit als Bindemittel eingesetzt wird. Je mehr Bentonit zugemischt wird, je geringer wird die Härte der entsprechend hergestellten Dämmstoffe.

Eine besonders innige Bindung zwischen Mineralfasern und Bindemittel wird erfindungsgemäß dadurch erreicht, daß die Fasern aus einem tonarmen Mergel gezogen und dann mit Kieselgur oder einem Gemisch aus Kieselgur und Bentonit gebunden werden.

Eine besonders gleichmäßige Aushärtung und schnelle Aushärtung des Gemisches wird erfindungsgemäß dadurch erreicht, daß das Gemisch aus Fasern und Kieselgur/Wasser zum Aushärten mit Mikrowellen beaufschlagt wird. Die Mikrowellen erbringen durch Absorption eine gleichmäßige Wärme, vor allem über den gesamten Querschnitt gesehen, so daß damit die Aushärtung auch über den gesamten Querschnitt gleich ist. Dabei kann es vorteilhaft sein, daß Gemisch während des Aushärtens zu bewegen, vorzugsweise etagenweise mehrfach den Mikrowellen auszusetzen, was insbesondere zur Ausnutzung der Mikrowellen vorteilhaft ist, wenn diese nicht in der vorgegebenen Schicht aus Fasern und Kieselgur bzw. Bentonit bereits völlig absorbiert worden sind. Bei den darunterliegenden zu trocknenden Teilen erfolgt auf diese Art und Weise eine Vortrocknung und durch die Endbestrahlung mit Mikrowellen eine Resttrocknung.

Eine weitere vorteilhafte Beeinflussungsmöglichkeit in Richtung Aushärtung wird erreicht, indem das Gemisch gleichzeitig direkt über Heißluft oder Heißdampf wärmebehandelt wird. Damit können beispielsweise Oberflächen gezielt vorzeitig ausgehärtet werden, während der Kern eines solchen Gemisches dann anderen Aushärtungsbedingungen ausgesetzt wird.

Aufgrund der besonderen Bedingungen beim Aushärten ist es von Vorteil, wenn das Gemisch vor und während des Aushärtens zu Platten, Schalen oder Blöcken geformt wird, um dann nach dem Aushärten bereits die Endform zu haben, in der es weiter verarbeitet werden kann. Aufgrund des Aushärteprozesses insbesondere mit Hilfe von Mikrowellen können die Platten, Schalen oder Blöcke ohne Probleme aus der jeweiligen Form entnommen werden.

Ein vereifachtes Verfahren zur Herstellung der Dämmstoffe ist das, bei dem die Fasern nach der Vereinzelung mit trockenem Kieselgur gemischt, geformt und gepreßt werden und daß dann die notwendige Feuchtigkeit in Form von Wasserdampf zugeführt wird. Dabei kann durch den Wasserdampf genau soviel Feuchte zugeführt werden, daß sich der weitere Trocknungsprozeß praktisch erübrigt, dennoch aber die gewünschte Stabilisierung der einzelnen Fasern einstellt. Wichtig ist es dabei, daß Kieselgur und Fasern gleichmäßig durchmischt sind, ohne daß sich Nester bilden, entweder von Fasern oder von Kieselgur oder auch von beiden. Bei entsprechend vergleichmäßigter Mischung kann die Feuchtigkeit in Form des Wasserdampfes dann die gewünschte Bindung und Aushärtung ergeben. Dieses Verfahren ist insbesondere deshalb vorteilhaft, weil praktisch kein Prozeßwasser anfällt, wodurch das Verfahren vereinfacht und auch letztlich umweltfreundlicher wird.

Zur Durchführung des Verfahrens dient eine Vorrichtung, bei der dem Anmaischbehälter eine Intensivmischer mit Mischstrecke nachgeordnet und die Form- und Trocknungseinrichtung von Formen aufweisenden Transportbändern und einer Strahlwärmetrocknung gebildet ist. Eine solche Vorrichtung bringt die Möglichkeit, die Mineralfaser bzw. die Wolle gleichmäßig und sicher mit dem Kieselgur bzw. Bentonit zu mischen, um sie dann anschließend durch Trocknen zu stabilisieren bzw. auszuhärten. Der Intensivmischer bringt die Vereinzelung der einzelnen Fasern und damit die Möglichkeit, diese Fasern anschließend innig mit dem Kieselgur bzw. Bentonit zu mischen und damit wie angestrebt zu stabilisieren und gleichzeitig die Möglichkeit vorzugeben, aus diesen stabilisierten Fasern dann die gewünschte Platte oder Form herzustellen. Die Mischstrecke dient vorteilhaft gleichzeitig als Transportvorrichtung, so daß ein quasi kontinuierlicher Betrieb möglich ist, wozu auch die Transportbänder vorgesehen sind, so daß eine schnelle und große Durchsätze erlaubende Vorrichtung geschaffen ist. Dabei kann es zweckmäßig sein, über die Länge der Mischstrecke an verschiedenen Stellen Kieselgur/Bentonit und/oder Wasser zuzugeben. Die Strahlwärme ist in dieser Form vorgesehen, um die beschriebene kontinuierliche Herstellungsweise abzusichern.

Um aus dem Anmaischbehälter direkt Matten oder Platten herstellen zu können, sieht die Erfindung vor, daß der Anmaischbehälter einen schlitzförmigen Austrag aufweist, dessen Öffnung in Bezug auf Breite und Höhe veränderbar ausgebildet ist. So kann beispielsweise durch schrittweises Vorwärtsbewegen des Transportbandes bereits eine Unterteilung der einzelnen Bahnen bzw. Platten erreicht werden, die dann anschließend der Trocknung zugeführt und schließlich endverarbeitet werden.

Eine weitere Möglichkeit der Formgebung ist die, daß der Austrag mit den Einfüllöffnungen von beheizbaren Formen korrespondierend ausgebildet ist, was zwar den Nachteil bringt, daß die beheizbaren Formen nur einen diskontinuier lichen Betrieb zulassen, dafür aber aufwendige Heizschränke und ähnliches vermeiden. Die fertigen Produkte können dann als Dämmstoff in der vorgesehenen Weise der Verarbeitung zugeführt werden.

Eine besonders vorteilhafte Ausbildung ist die, bei der dem Transportband mit den Formen eine Mikrowelleneinrichtung zugeordnet ist. Diese Mikrowelleneinrichtung ermöglicht eine gleichmäßige Erwärmung über den gesamten Querschnitt und damit eine vorteilhafte Aushärtung des gesamten Dämmstoffes auch bei Ausbildung in Blockform oder in großflächigen Platten.

Die Erfindung zeichnet sich insbesondere dadurch aus, daß ein Dämmstoff, ein Verfahren und eine Vorrichtung zur Durchführung des Verfahrens geschaffen sind, mit denen Blöcke, Platten, Schalen oder Segmente aus einem optimalen Wärmedämmstoff hergestellt werden können. Optimal ist dieser Wärmedämmstoff insbesondere, weil aufgrund des zum Einsatz kommenden anorganischen Bindemittels Kieselgur und/oder Bentonit ein nicht brennbarer Wärmedämmstoff (Bauklasse A1 nach DIN 4102) zur Verfügung gestellt wird, der darüber hinaus bis zu Anwendungstemperaturen von 1000° C verarbeitet und eingesetzt werden kann, ohne daß Umweltbelastungen eintreten oder gar Gesundheitsschäden zu befürchten sind. Je nach Zugabe des Kieselgurs bzw. Bentonits kann die innere und äußere Festigkeit, die Elastizität, Flexibilität usw. eingestellt werden, so daß je nach Einsatzfall vorbehandelte Dämmstoffe vorhanden sind. Auch in chemischer Hinsicht stellt der Wärmedämmstoff alle bisherigen Dämmstoffe in den Schatten, weil er alle an diese Dämmstoffe gestellten Anforderungen voll erfüllt. Vorteilhaft ist darüber hinaus, daß bei der Verarbeitung Staub nicht freigesetzt wird oder aber wenn Staub entsteht, dieser keine Gesundheitsgefahr aufgrund seiner Zusammensetzung darstellt. Die einzelnen Mineralfasern werden durch das Kieselgur bzw. Bentonit voll einge bunden und stabilisiert, so daß eine anschließende weitere Verarbeitung zu Platten u.ä. Formteilen möglich ist, ohne daß im Anschluß an den Trocknungsvorgang ein Aufblähen oder Aufblättern der hergestellten Platten und Formteile zu befürchten ist. Der zum Einsatz kommende Kieselgur ermöglicht Kurztrocknungs- bzw. Aushärtezeiten, wobei durch die erfindungsgemäße Vorrichtung darüber hinaus die Möglichkeit gegeben ist, die Platten und Formteile vollständig und über die gesamte Dicke zu trocknen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

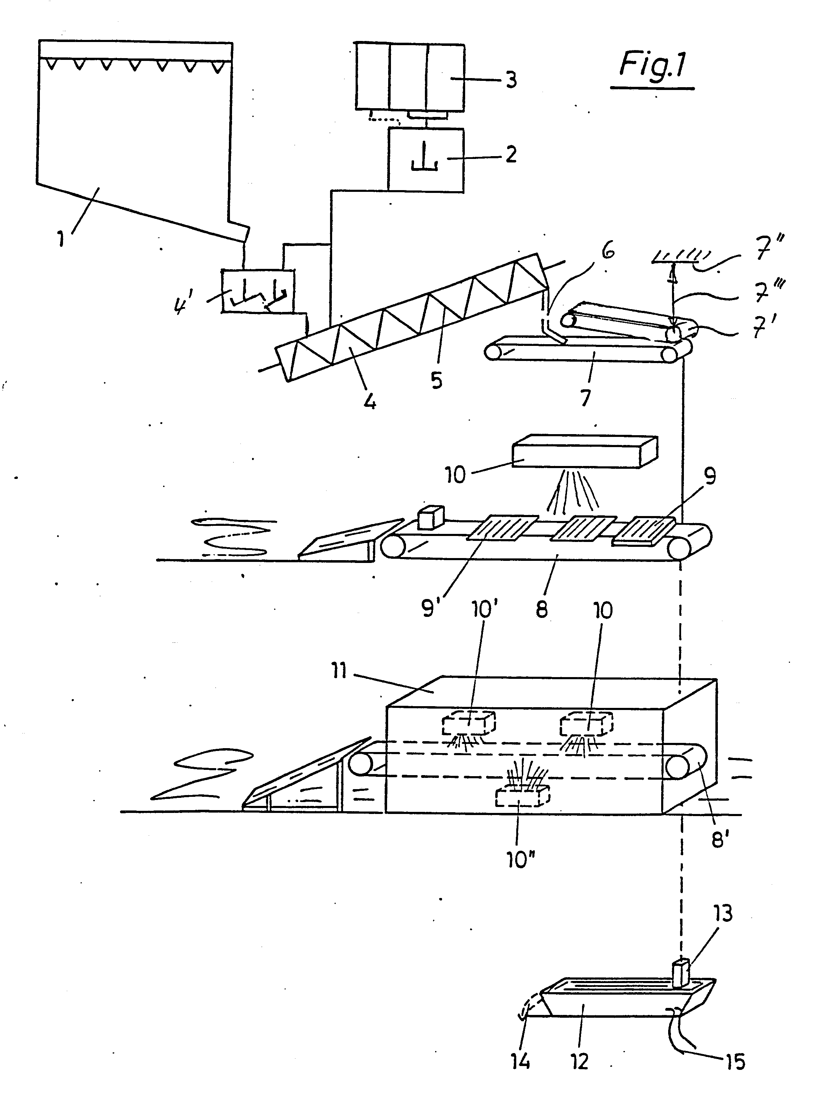

Fig. 1 eine schematische Darstellung einer entsprechenden Vorrichtung bzw. Anlage zur Herstellung der neuartigen Wärmedämmstoffes.

Die einzige Figur gibt ein Verfahrensschema wieder, wobei die dort wiedergegebene Düsenzieheinrichtung (1) im oberen Teil die Glasschmelze wiedergibt und darunter die verteilt angeordneten sogenannten Zwiebeln, durch die das Flüssigmaterial hindurchgezogen wird. Die dann sich zusammenballenden Glas- bzw. Mineralfasern werden über die Schräge zum Austrag geführt und dann weiterverarbeitet.

Mit (2) ist der Anmaischbehälter bezeichnet, in dem das Kieselgur aus dem Vorratsbehälter (3) mit ebenfalls im Vorratsbehälter vorgehaltenen Wasser intensiv gemischt wird. Der Anmaischbehälter (2) weist hierzu eine Rühreinrichtung auf, während der Vorratsbehälter (3) noch einen dritten Abschnitt aufweist, in dem Bentonit vorgehalten wird, das das Kieselgur teilweise oder auch ganz ersetzen soll.

Die Mineralfasern und das im Anmaischbehälter (2) vorbereitete Bindemittel werden im Intensivmischer (4′) intensiv miteinander vermischt, wobei die Fasern so weit vereinzelt werden, daß das Kieselgur bzw. der Bentonit sich auch wirklich an die gesamte Länge der Faser anlegen kann. Dieser Verbindungsvorgang bzw. Stabilisierungsvorgang der einzelnen Fasern wird vervollständigt in der Mischeinrichtung (4) mit der gleichzeitig als Fördermittel dienenden Mischschnecke (5). Diese kontinuierliche Durchmischung sichert ein gleichmäßig verbundenes Material, das dann weiterverarbeitet werden kann. Über die Länge der Mischeinrichtung (4) kann an verschiedenen Stellen ergänzend Kieselgur/Wasser- oder Bentonit/Wassergemisch zugeführt werden.

Die anorganisch gebundene Mineralwolle wird dann über den Austrag (6) auf ein Transportband (7) abgelegt, das als Gitterband ausgebildet sein kann, um hier bereits durch Abtropfen eine erste Trocknung zu bewirken. Darüber hinaus kann ein zweites Band (7′) verlaufen, um eine Formgebung oder Vorformgebung zu bewirken. Dieses Band (7′) ist an einem Widerlager (7″) aufgehängt und in der Höhe einstellbar, wobei über die verstellbare Preßeinrichtung (7‴) für den notwendigen Andruck gesorgt wird.

Von dem Transportband (7) wird das durch die besondere Form des Austrages (6) bereits vorgeformte Mischung aus Mineralfasern und Kieselgur bzw. Bentonit auf das Trockenband (8) abgelegt. Hier können kleinere Formen (9) vorgesehen sein oder aber das entsprechend ja schon vorgetrocknete Material wird in Form von kleinen Platten (9, 9′) auf dem Trockenband (8) transportiert, um dann in der Mikrowelleneinrichtung (1o) entsprechend schnell und gleichmäßig ausgehärtet zu werden. Für den Fall, daß die Platten (9′) gleich auf das Trockenband (8) abgelegt werden, ist auch hier ein gitterförmiges Band von Vorteil, um so das Aushärten zu erleichtern.

Statt der Mikrowelleneinrichtung (1o) mit dem Trockenband (8) ist es auch möglich, vom Transportband (7) das auszuhärtende Material auf ein Trockenband (8) zu geben, das durch einen Heizschrank (11) hindurchgeführt wird. In diesem Heizschrank (11) können wiederum Mikrowelleneinrichtungen (1o, 1o′, 1o″) untergebracht und/oder auch normale Beheizungseinrichtungen, um so im Heizschrank (11) eine Trocknungstemperatur vorzugeben, die zu einer entsprechenden Aushärtung des gebundenen Fasergemisches führt. Die entsprechende Einrichtung sichert eine weitere Verkürzung der Trocknungszeit auch bei der für Kieselgur sowieso schon kurzen Trocknung. Dies ist besonders vorteilhaft, weil damit auch eine Energieersparnis anfällt.

Jeweils über eine an das Trockenband (8, 8′) anschließende Rutsche wird das ausgehärtete Material abgeführt und kann dann je nach Anwendungsfall weiterverarbeitet werden.

Neben den beiden mit den Trockenbändern (8, 8′) arbeitenden Ausführungen ist es möglich, an das Transportband (7) jeweils verschiedene bzw. gleich ausgebildete große Formen (12) anzuschließen, die über die Einfüllöffnung (13) mit dem noch feuchten, gebundenen Steinwollegemisch beschickt werden. Die große Form (12) ist beheizt, was durch Zuleitungen (15) angedeutet ist, so daß nach entsprechender Aushärtezeit das Material über den Austrag (14) wieder aus der Form (12) herausgeschoben werden kann, um dann der weiteren Verarbeitung zugeführt zu werden.

Es ist auch möglich, alle verschiedenen Anwendungsfälle mit dem Trockenband (8, 8′) und dem Heizschrank (11) bzw. den Mikrowelleneinrichtungen (1o) sowie der jeweiligen beheizbaren Form (12) gleichzeitig einzusetzen, um so unterschiedliche Endprodukte in möglichst kurzer Zeit herstellen zu können.

## Ansprüche

1. Dämmstoff aus einem Gemisch von Mineralwolle und Bindemittel, das in einem Trocknungsprozeß ausgehärtet ist,

**dadurch gekennzeichnet,**

daß das Bindemittel im Wasser angemaischtes Kieselgur ist und daß die Mineralwolle gereinigt und nicht stabilisierte, von Schmelzperlen befreite Einzelmineralfasern sind.

2. Dämmstoff nach Anspruch 1,

**dadurch gekennzeichnet,**

daß das Bindemittel ein Gemisch von in Wasser angemaischtem Kieselgur und Bentonit oder reinem Bentonit ist.

3. Verfahren zum Herstellen von Dämmstoff aus einem Gemisch von Mineralwolle und Bindemittel gemäß Anspruch 1 oder Anspruch 2, wobei die Mineralwolle mit dem Bindemittel gemischt und in einer Trocknung ausgehärtet wird,

**dadurch gekennzeichnet,**

daß die Mineralwollefasern gereinigt, auch von Schmelzperlen befreit und dann mit vorher in Wasser angemaischtem Kieselgur gemischt und anschließend unter Wasserentzug ausgehärtet werden.

4. Verfahren nach Anspruch 3,

**dadurch gekennzeichnet,**

daß die Mineralwolle und Kieselgur bis zur Vereinzelung der Fasern intensiv gemischt und dann weiterbearbeitet werden.

5. Verfahren nach Anspruch 3,

**dadurch gekennzeichnet,**

daß Fasern und Kieselgur im Verhältnis 1o : 3 gemischt werden.

6. Verfahren nach Anspruch 3,

**dadurch gekennzeichnet,**

daß Kieselgur im Gemisch mit Bentonit als Bindemittel eingesetzt wird.

7. Verfahren nach Anspruch 3,

**dadurch gekennzeichnet,**

daß die Fasern aus einem tonarmen Mergel gezogen und dann mit Kieselgur oder einem Gemisch aus Kieselgur und Bentonit gebunden werden.

8. Verfahren nach Anspruch 3,

**dadurch gekennzeichnet,**

daß das Gemisch aus Fasern und Kieselgur/Wasser zum Aushärten mit Mikrowellen beaufschlagt wird.

9. Verfahren nach Anspruch 8,

**dadurch gekennzeichnet,**

daß das Gemisch während des Aushärtens bewegt, vorzugsweise etagenweise mehrfach den Mikrowellen ausgesetzt wird.

1o. Verfahren nach Anspruch 8 oder Anspruch 9,

**dadurch gekennzeichnet,**

daß das Gemisch gleichzeitig direkt über Heißluft oder Heißdampf wärmebehandelt wird.

11. Verfahren nach Anspruch 3,

**dadurch gekennzeichnet,**

daß das Gemisch vor und während des Aushärtens zu Platten, Schalen oder Blöcken geformt wird.

12. Verfahren nach Anspruch 3,

**dadurch gekennzeichnet,**

daß die Fasern nach der Vereinzelung mit trockenem Kieselgur gemischt, geformt und gepreßt werden und daß dann die notwendige Feuchtigkeit in Form von Wasserdampf zugeführt wird.

13. Vorrichtung zur Durchführung des Verfahrens nach Anspruch 3 oder einem oder mehreren der nachfolgenden Ansprüche, mit einem Anmaischbehälter für das Bindemittel sowie einer Misch-, Form- und Trocknungseinrichtung, **dadurch gekennzeichnet,**

daß dem Anmaischbehälter (2) ein Intensivmischer (4´) mit Mischeinrichtung (4) nachgeordnet und die Form- und Trocknungseinrichtung (7, 8, 9, 10, 11, 12) von Formen (9) aufweisenden Transportbändern (7) und einer Strahlwärmetrocknung (10, 11) gebildet ist.

14. Vorrichtung nach Anspruch 13,

**dadurch gekennzeichnet,**

daß die Mischeinrichtung (4) einen schlitzförmigen Austrag (6) aufweist, dessen Öffnung in bezug auf Breite und Höhe veränderbar ausgebildet ist.

15. Vorrichtung nach Anspruch 14,

**dadurch gekennzeichnet,**

daß der Austrag (6) mit den Einfüllöffnungen (13) von beheizbaren Formen (12) korrespondierend ausgebildet ist.

16. Vorrichtung nach Anspruch 13,

**dadurch gekennzeichnet,**

daß dem Transportband (7) mit den Formen (9, 12) eine Mikrowelleneinrichtung (10) zugeordnet ist.

*Fig.1*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C- 709 938 (BERLINER GIPSWERKE) * Ansprüche 1,3; Seite 1, Zeile 41 - Seite 2, Zeile 2 * --- | 1,3 | C 04 B 28/00 |
| X | US-A-2 448 186 (L.B. MILLER et al.) * Ansprüche 1,5,6; Spalte 1, Zeilen 19-37 * --- | 1,6,11, 12 | |
| X | US-A-1 851 038 (H.N. CLARK) * Anspruch 1 * --- | 1 | |
| D,A | US-A-2 500 665 (H.C. COURTRIGHT) ----- | 1 | |

| | RECHERCHIERTE SACHGEBIETE (Int. Cl.5) |
|---|---|
| | C 04 B |

Der vorliegende Recherchenbericht wurde für alle Patentansprüche erstellt

| Recherchenort | Abschlußdatum der Recherche | Prüfer |
|---|---|---|
| BERLIN | 26-02-1990 | KESTEN W.G. |